# EUROPÄISCHE PATENTSCHRIFT

(11) **EP 1 949 198 B1**
(45) Veröffentlichungstag und Bekanntmachung des Hinweises auf die Patenterteilung: **22.12.2010**
(21) Anmeldenummer: 06818024.9
(22) Anmeldetag: 20.10.2006
(51) Int. Cl.: G05D 7/06, B60H 1/24

(54) **SAUGGASDROSSELEINRICHTUNG**
INTAKE-GAS THROTTLE DEVICE
SYSTEME D'ETRANGLEMENT POUR GAZ PAUVRE

(30) Priorität: 09.11.2005 DE 102005053453
(43) Veröffentlichungstag der Anmeldung: 30.07.2008
(73) Patentinhaber: Ixetic Bad Homburg GmbH, 61352 Bad Homburg (DE)
(72) Erfinder: PARSCH, Willi, 64342 Seeheim (DE); SCHÄFER, Tilo, 55566 Daubach (DE)
(86) Internationale Anmeldenummer: PCT/DE2006/001849
(87) Internationale Veröffentlichungsnummer: WO 2007/054054

(56) Entgegenhaltungen:
- EP-A2- 0 963 895
- US-A- 3 393 699
- US-A1- 2002 036 013

## Beschreibung

Die Erfindung betrifft eine Sauggasdrosseleinrichtung im Ansaugbereich eines Klimakompressors, insbesondere für Klimaanlagen für Kraftfahrzeuge, für eine Fördermengenregelung des Klimakompressors.

Derartige Sauggasdrosseleinrichtungen sind bekannt, z.B. US 3393699. Dabei ist eine selbsttätige Sauggasdrosselung sinnvoll nur als 2-Punkt - Regler darstellbar und eine Volumenstromregelung nur als interne Regelung möglich, analog zu den internen hubraumgeregelten Verdichtern. Diese Art der Regelung erfordert immer noch den Einsatz einer zusätzlichen Schaltkupplung am Verdichter. Es besteht daher die Aufgabe, eine externe Volumenstromeinrichtung für eine Saugdrosselung zu schaffen, die vollkommen unabhängig von den gerade herrschenden Anlagendrücken und Volumenströmen arbeitet. Die Verstellung soll vor allem mechanisch einfach sein.

Die Aufgabe wird gelöst durch eine Sauggasdrosseleinrichtung im Ansaugdruckbereich eines Klimakompressors, insbesondere für Klimaanlagen für Kraftfahrzeuge, für eine Fördermengenregelung des Klimakompressors, wobei die Sauggasdrosseleinrichtung eine Vorsteuereinrichtung aufweist.

Bevorzugt wird eine Sauggasdrosseleinrichtung, bei welcher die Vorsteuereinrichtung einen veränderbaren Drosselquerschnitt, beispielsweise durch einen Schieber im Ansaugstrombereich des Klimakompressors verstellt. Auch wird eine Sauggasdrosseleinrichtung bevorzugt, bei welcher eine Seite des Schiebers mit einem Vorsteuerdruckraum verbunden ist und die andere Seite des Schiebers mit dem Druckbereich im Ansaugstrombereich des Klimakompressors stromab hinter der Sauggasdrosseleinrichtung verbunden ist.

Eine erfindungsgemäße Sauggasdrosseleinrichtung zeichnet sich dadurch aus, dass der Vorsteuerdruckraum über einen Zulaufwiderstand mit dem Ansaugstrombereich stromauf vor der Sauggasdrosseleinrichtung und über einen Ablaufwiderstand mit dem Ansaugstrombereich stromab hinter der Sauggasdrosseleinrichtung verbunden ist oder umgekehrt.

Bevorzugt wird eine Sauggasdrosseleinrichtung, bei welcher der Zulaufviriderstand als Ventil ausgebildet ist. Auch wird eine Sauggasdrosseleinrichtung bevorzugt, bei welcher das Ventil mittels eines Elektromagneten pulsweitenmoduliert betätigt ist.

Weiterhin wird eine Sauggasdrosseleinrichtung bevorzugt, bei welcher der Ablaufwiderstand des Vorsteuerdruckraumes als konstanter Strömungswiderstand, beispielsweise als Drossel, ausgebildet ist.

Eine weitere erfindungsgemäße Sauggasdrosseleinrichtung zeichnet sich dadurch aus, dass der Schieber gegen eine Federkraft und den stromab hinter der Sauggasdrosseleinrichtung herrschenden Druck aus dem Vorsteuerdruckraum verschiebbar ist, sodass durch Verschiebung des Schiebers der Hauptdrosselquerschnitt stufenlos verkleinerbar ist.

Auch wird eine Sauggasdrosseleinrichtung bevorzugt, bei welcher die Pulsweitenmodulations-Pulsation des Vorsteuerventils durch das Vorsteuerdruckraum-Volumen abgedämpft wird, sodass sich im Vorsteuerdruckraum ein etwa konstanter Vorsteuerdruck proportional zum Pulsweitenmodulations-Signal einstellt und der Schieber nicht pulsiert, sondern eine Proportionalventilstellung einnimmt. Das hat den Vorteil, dass durch die Dämpfungseigenschaften des mit einem Gas gefüllten Vorsteuerdruckraumes und dessen Dimensionierung für die Vorsteuerung ein pulsweitenmodullertes Ventil eingesetzt werden kann und trotzdem die Hauptstufe, also der Schieber, eine der Pulsweite proportionale, nicht pulsierende Stellung einnimmt.

Weiterhin wird eine Sauggasdrosseleinrichtung bevorzugt, bei welcher der Schieber zwischen dem Ansaugdruckbereich der Klimaanlage und dem Ansaugdruckbereich des Kompressors angeordnet ist. Auch wird eine Sauggasdrosseleinrichtung bevorzugt, bei welcher das Zulaufventil der Vorsteuereinrichtung zwischen dem Ansaugdruckbereich der Klimaanlage und dem Vorsteuerdruckraum angeordnet ist. Weiterhin wird eine Sauggasdrosseleinrichtung bevorzugt, bei welcher der Ablaufströmungswiderstand der Vorsteuereinrichtung zwischen dem Vorsteuerdruckraum und dem Ansaugdruckbereich des Klimakompressors angeordnet ist.

Eine erfindungsgemäße Ausbildung der Sauggasdrosseleinrichtung zeichnet sich dadurch aus, dass der Schieber als Membranschieber ausgebildet ist. Eine andere erfindungsgemäße Ausbildungsform der Sauggasdrosseleinrichtung zeichnet sich dadurch aus, dass der Schieber als Kolbenschieber ausgebildet ist. Weiterhin wird eine Sauggasdrosseleinrichtung bevorzugt, bei welcher ein hülsenförmiger Schieber Öffnungen aufweist, welche mit Öffnungen in einer Führungshülse eine Drosselstelle für den Ansaugstrom des Klimakompressors ausbilden.

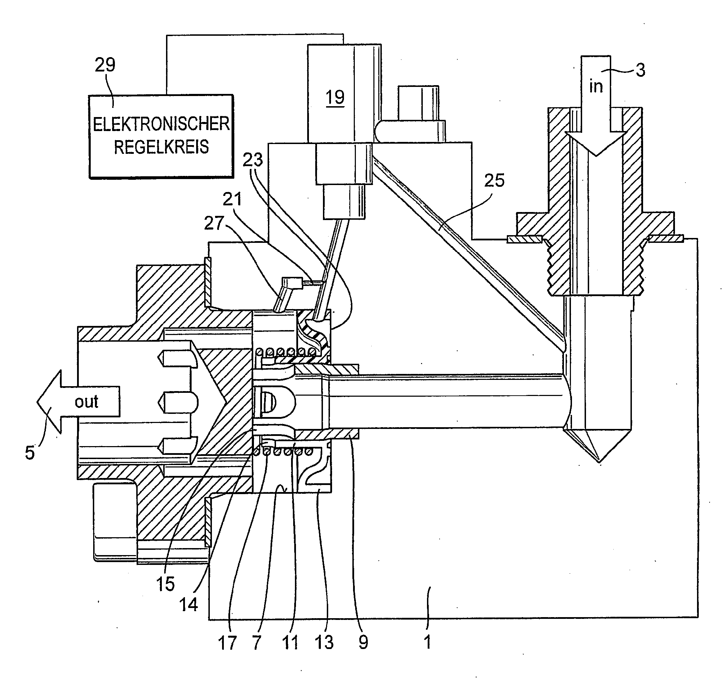

Die Erfindung wird nun anhand der Figur beschrieben.

Die einzige Figur zeigt eine vorgesteuerte Sauggasdrosseleinrichtung. Ein Gehäuse 1 besitzt einen Einlass, welcher mit dem Ansaugbereich 3 einer Klimaanlage verbunden ist, und einen Auslass, welcher mit dem Ansaugbereich 5 eines Klimakompressors verbunden ist. In einer Ausnehmung 7 des Gehäuses 1 ist eine fest eingesetzte Führungshülse 9 und eine darauf verschiebbare Schieberhülse 11 mit einer Membran 13 angeordnet. Die Schieberhülse 11 weist etwa halbkreisförmige Öffnungen 14 und die Führungshülse 9 weist entsprechend größere Öffnungen 15 auf, sodass beim Vorfahren der Schieberhülse der gesamte Drosselquerschnitt, der sich aus der Überlagerung der Öffnungen 13 und 15 ergibt, den durch die Sauggasdrosseleinrichtung strömenden Ansaugstrom zum Kompressor drosselt. Die Schieberhülse 11, die mit der Membran 13 einstückig verbunden ist, wird durch eine Schraubenfeder 17 in ihren hinteren Anschlag gedrückt.

Das Gehäuse 1 weist ferner eine Vorsteuereinrichtung für diese Schiebereinrichtung auf, welche im wesentlichen aus einem pulsweitenmodulierten Ventil 19, einem Ablaufströmungswiderstand 21, welcher hier als eine Engstelle, also als eine Leitungsdrossel ausgebildet ist, und einen Vorsteuerdruckraum 23, welcher durch das Leitungsvolumen zwischen dem Ventil 19 und dem Widerstand 21 sowie durch das Volumen des Druckraums hinter der Membran 13 ausgebildet ist. Aus dem Ansaugdruckbereich 3, welcher mit der Klimaanlage verbunden ist, führt eine Zulaufleitung 25 zum Vorsteuerventil 19, und von der Ablaufdrossel 21 führt eine Ablaufleitung 27 in den Saugdruckbereich stromab hinter der Sauggasdrosseleinrichtung, also in den Ansaugdruckbereich 5 des Klimakompressors.

Die Funktion der Vorsteuereinrichtung wird wie folgt beschrieben. Wird das pulsweitenmodulierte Ventil 19 beispielsweise durch einen externen elektronischen Regelkreis 29 geschlossen, so ist die Verbindung zum Ansaugdruckbereich 3 der Klimaanlage unterbrochen. Über die Vorsteuerablaufleitung 27 und die Drossel 21 ist der Vorsteuerdruckbereich 23 mit dem Ansaugdruck des Klimakompressors im Bereich 5 verbunden, sodass vor und hinter der Membran 13 der gleiche Druck herrscht. Folglich wird durch die Schraubenfeder 17 die Schieberhülse 11 mit ihren Öffnungen 13 in der hier dargestellten Position gehalten, der Drosselquerschnitt der Sauggasdrosseleinrichtung ist maximal geöffnet. Wird nun durch ein zunehmendes pulsweitenmoduliertes Signal das Ventil 19 zunehmend länger geöffnet, so wird durch Gaszuströmung aus dem Ansaugdruckbereich 3 über die Vorsteuerleitung 25 sich im Vorsteuerdruckraum 23 ein zunehmend höherer Druck einstellen als im Bereich 5 hinter der Sauggasdrosseleinrichtung, da der Abfluss des Gases aus dem Vorsteuerdruckraum 23 über die Drossel 21 verzögert wird und eventuell nicht so stark ist wie der Zulauf des Gases in den Vorsteuerdruckraum 23 aus dem etwas höheren Saugdruck im Bereich 3 über die Leitung 25. Damit steigt der Vorsteuerdruck hinter der Membran 13 an und verschiebt die Membran 13 und damit die Schieberhülse 11 gegen die Kraft der Feder 17 und gegen den Ansaugdruck im Bereich 5, sodass sich der Öffnungsquerschnitt, gebildet aus den überlagerten Öffnungen 15 der Führungshülse 9 und 13 der Schieberhülse 11, verkleinert. Da das Medium im Vorsteuerdruckraum 23 ein Gas ist, werden die Pulsationen des Ventils 19 in diesem Gasvolumen abgedämpft und übertragen sich nicht auf die Schieberbewegung der Schieberhülse 11, so dass trotz pulsweiten moduliertem Signal des Vorsteuerventils 19 eine proportional dem Signal, aber nicht pulsierende, konstante Position des Drosselquerschnitts einstellbar ist. Das ist durch den bisher bekannten Stand der Technik nicht möglich. Durch diese erfindungsgemäße Anordnung einer entsprechenden Vorsteuerung wird also durch ein pulsweitenmoduliertes, also schwingendes Eingangssignal eine der Pulsweite proportionale, aber ruhige, d.h. konstante Hauptdrosseleinstellung zur Regelung des Ansaugvolumenstromes eines Klimakompressors ermöglicht.

### Bezugszeichenliste

- 1: Gehäuse
- 3: Einlass
- 5: Auslass
- 7: Ausnehmung
- 9: Führungshülse
- 11: Schieberhülse
- 13: Membrane
- 14: halbkreisförmige Öffnungen
- 15: Öffnungen
- 17: Schraubenfeder
- 21: Ablauf-Strömungswiderstand
- 23: Vorsteuerdruckraum
- 25: Zulaufleitung
- 27: Ablaufleitung
- 29: elektronischer Regelkreis

## Patentansprüche

1. Sauggasdrosseleinrichtung im Ansaugdruckbereich eines Klimakompressors, insbesondere für Klimaanlagen für Kraftfahrzeuge, für eine Fördermengenregelung des Klimakompressors, **dadurch gekennzeichnet, dass** die Sauggasdrosseleinrichtung eine Vorsteuereinrichtung aufweist.

2. Sauggasdrosseleinrichtung nach Anspruch 1, **dadurch gekennzeichnet, dass** die Vorsteuereinrichtung einen veränderbaren Drosselquerschnitt verstellt, beispielsweise durch einen Schieber (11) im Ansaugstrombereich des Klimakompressors.

3. Sauggasdrosseleinrichtung nach Anspruch 2, **dadurch gekennzeichnet, dass** eine Seite des Schiebers (11) mit einem Vorsteuerdruckraum (23) verbunden ist, während die andere Seite des Schiebers (11) mit dem Druckbereich (5) im Ansaugstrombereich des Klimakompressors stromab hinter der Sauggasdrosseleinrichtung verbunden ist.

4. Sauggasdrosseleinrichtung nach Anspruch 3, **dadurch gekennzeichnet, dass** der Vorsteuerdruckraum (23) über einen Zulaufwiderstand mit dem Ansaugstrombereich (3) stromauf vor der Sauggasdrosseleinrichtung und mit einem Ablaufwiderstand mit dem Ansaugstrombereich (5) stromab hinter der Sauggasdrosseleinrichtung verbunden ist oder umgekehrt.

5. Sauggasdrosseleinrichtung nach Anspruch 4, **dadurch gekennzeichnet, dass** der Zulaufwiderstand als Ventil (19) ausgebildet ist.

6. Sauggasdrosseleinrichtung nach Anspruch 5, **dadurch gekennzeichnet, dass** das Ventil (19) mittels eines Elektromagneten pulsweitenmoduliert betätigt ist.

7. Sauggasdrosseleinrichtung nach Anspruch 4, 5 oder 6, **dadurch gekennzeichnet, dass** der Ablaufwiderstand als konstanter Strömungswiderstand, beispielsweise als Drossel (21), ausgebildet ist.

8. Sauggasdrosseleinrichtung nach einem der vorhergehenden Ansprüche, **dadurch gekennzeichnet, dass** der Schieber (11) gegen eine Federkraft und den stromab hinter der Sauggasdrosseleinrichtung herrschenden Druck durch den Druck aus dem Vorsteuerdruckraum verschiebbar ist, sodass durch Verschiebung des Schiebers (11) der Hauptdrosselquerschnitt stufenlos verkleinerbar ist.

9. Sauggasdrosseleinrichtung nach Anspruch 6, 7 oder 8, **dadurch gekennzeichnet, dass** die Pulsweitenmodulations-Pulsation des Vorsteuerventils (19) durch das Vorsteuerdruckraum-Volumen abgedämpft wird, sodass sich im Vorsteuerdruckraum (23) ein etwa konstanter Vorsteuerdruck proportional zum Pulsweitenmodulations-Signal einstellt und damit der Schieber (11) nicht mit pulsiert, sondern eine Proportionalventilstellung einnimmt.

10. Sauggasdrosseleinrichtung nach einem der vorhergehenden Ansprüche, **dadurch gekennzeichnet, dass** der Schieber (11) zwischen dem Ansaugbereich (3) der Klimaanlage und dem Ansaugbereich (5) des Kompressors angeordnet ist.

11. Sauggasdrosseleinrichtung nach einem der vorhergehenden Ansprüche, **dadurch gekennzeichnet, dass** das Zulaufventil (19) der Vorsteuereinrichtung zwischen dem Ansaugbereich (3) der Klimaanlage und dem Vorsteuerdruckraum (23) angeordnet ist.

12. Sauggasdrosseleinrichtung nach einem der vorhergehenden Ansprüche, **dadurch gekennzeichnet, dass** der Ablaufströmungswiderstand (21) der Vorsteuereinrichtung zwischen dem Vorsteuerdruckraum (23) und dem Ansaugbereich (5) des Kompressors angeordnet ist.

13. Sauggasdrosseleinrichtung nach einem der vorhergehenden Ansprüche, **dadurch gekennzeichnet, dass** der Schieber (11) als Membranschieber ausgebildet ist.

14. Sauggasdrosseleinrichtung nach einem der vorhergehenden Ansprüche, **dadurch gekennzeichnet, dass** der Schieber als Kolbenschieber ausgebildet ist.

15. Sauggasdrosseleinrichtung nach einem der vorhergehenden Ansprüche, **dadurch gekennzeichnet, dass** ein hülsenförmiger Schieber (11) mit Schieberöffnungen (14) mit einer Führungshülse (9) mit Öffnungen (15) eine Drosselstelle für den Ausgangsstrom des Klimakompressors ausbildet.

## Claims

1. An intake gas throttle device in the intake pressure region of an air-conditioning compressor, in particular for air-conditioning systems of motor vehicles, for controlling the delivery rate of the air-conditioning compressor, **characterized in that** the intake gas throttle device has a pre-control unit.

2. The intake gas throttle device according to Claim 1, **characterized in that** the pre-control device adjusts a changeable throttle cross section, for example by means of a slide (11) in the intake flow region of the air-conditioning compressor.

3. The intake gas throttle device according to Claim 2, **characterized in that** one side of the slide (11) is connected to a pre-control pressure chamber (23), while the other side of the slide (11) is connected to the pressure region (5) in the intake flow region of the air-conditioning compressor downstream after the intake gas throttle device.

4. The intake gas throttle device according to Claim 3, **characterized in that** the pre-control pressure chamber (23) is connected through an inflow resistor to the intake flow region (3) upstream ahead of the intake gas throttle device, and by means of an outflow resistor to the intake flow region (5) downstream after the intake gas throttle device, or vice versa.

5. The intake gas throttle device according to Claim 4, **characterized in that** the inflow resistor is designed as a valve (19).

6. The intake gas throttle device according to Claim 5, **characterized in that** the valve (19) is operated by means of an electromagnet, using pulse-width modulation.

7. The intake gas throttle device according to Claim 4, 5 or 6, **characterized in that** the outflow resistor is designed as a constant flow resistor, for example as a throttle (21).

8. The intake gas throttle device according to one of the preceding claims, **characterized in that** the slide (11) is movable against a spring force and against the pressure that prevails downstream after the intake gas throttle device, by the pressure from the pre-control pressure chamber, so that the cross section of the main throttle can be reduced steplessly by moving the slide (11).

9. The intake gas throttle device according to Claim 6, 7 or 8, **characterized in that** the pulse-width modulation pulsation of the pre-control valve (19) is damped by the volume of the pre-control pressure chamber, so that an approximately constant pre-control pressure proportional to the pulse-width modulation signal develops in the pre-control pressure chamber (23), and thus the slide (11) does not also pulsate, but assumes a proportional valve position.

10. The intake gas throttle device according to one of the preceding claims, **characterized in that** the slide (11) is situated between the intake region (3) of the air-conditioning system and the intake region (5) of the compressor.

11. The intake gas throttle device according to one of the preceding claims, **characterized in that** the inflow valve (19) of the pre-control device is situated between the intake region (3) of the air-conditioning system and the pre-control pressure chamber (23).

12. The intake gas throttle device according to one of the preceding claims, **characterized in that** the outflow flow resistor (21) of the pre-control device is situated between the pre-control pressure chamber (23) and the intake region (5) of the compressor.

13. The intake gas throttle device according to one of the preceding claims, **characterized in that** the slide (11) is designed as a diaphragm valve.

14. The intake gas throttle device according to one of the preceding claims, **characterized in that** the slide is designed as a piston valve.

15. The intake gas throttle device according to one of the preceding claims, **characterized in that** a sleeve-shaped slide (11) having slide openings (14) with a guide sleeve (9) having openings (15) forms a constriction point for the output flow of the air-conditioning compressor.

## Revendications

1. Système d'étranglement pour gaz pauvre dans la zone de pression d'aspiration d'un compresseur de climatisation, en particulier pour des climatisations de véhicules automobiles, pour une régulation du débit de refoulement du compresseur de climatisation, **caractérisé en ce que** le système d'étranglement pour gaz pauvre présente un système de précommande.

2. Système d'étranglement pour gaz pauvre selon la revendication 1, **caractérisé en ce que** le système de précommande règle une section transversale d'étranglement modifiable, par exemple par un tiroir (11) dans la zone du courant d'aspiration du compresseur de climatisation.

3. Système d'étranglement pour gaz pauvre selon la revendication 2, **caractérisé en ce qu'**un côté du tiroir (11) est relié à un espace de pression de précommande (23) alors que l'autre côté du tiroir (11) est relié à la zone de pression (5) dans la plage du courant d'aspiration du compresseur de climatisation en aval du système d'étranglement pour gaz pauvre.

4. Système d'étranglement pour gaz pauvre selon la revendication 3, **caractérisé en ce que** l'espace de pression de précommande (23) est relié par une résistance d'amenée à la zone du courant d'aspiration (3) en amont du système d'étranglement pour gaz pauvre et par une résistance d'écoulement à la zone du courant d'aspiration (5) en aval du système d'étranglement pour gaz pauvre ou inversement.

5. Système d'étranglement pour gaz pauvre selon la revendication 4, **caractérisé en ce que** la résistance d'amenée est réalisée comme une soupape (19).

6. Système d'étranglement pour gaz pauvre selon la revendication 5, **caractérisé en ce que** la soupape (19) est actionnée par modulation d'impulsions en largeur à l'aide d'un électroaimant.

7. Système d'étranglement pour gaz pauvre selon la revendication 4, 5 ou 6, **caractérisé en ce que** la résistance d'écoulement est réalisée comme une résistance à l'écoulement constante, par exemple comme un étranglement (21).

8. Système d'étranglement pour gaz pauvre selon l'une quelconque des revendications précédentes, **caractérisé en ce que** le tiroir (11) peut être déplacé contre une force de ressort et la pression régnant en aval du système d'étranglement pour gaz pauvre par la pression de l'espace de pression de précommande de sorte que par le déplacement du tiroir (11), la section transversale d'étranglement principale puisse être réduite en continu.

9. Système d'étranglement pour gaz pauvre selon la revendication 6, 7 ou 8, **caractérisé en ce que** la pulsation de modulation d'impulsions en largeur de la soupape de précommande (19) est amortie par le volume de l'espace de pression de précommande de sorte que dans l'espace de pression de précommande (23), une pression de précommande à peu près constante apparaisse proportionnellement au signal de modulation d'impulsions en largeur et ainsi le tiroir (11) ne pulse pas mais occupe une position de soupape proportionnelle.

10. Système d'étranglement pour gaz pauvre selon l'une quelconque des revendications précédentes, **caractérisé en ce que** le tiroir (11) est disposé entre la zone d'aspiration (3) de la climatisation et la zone d'aspiration (5) du compresseur.

11. Système d'étranglement pour gaz pauvre selon l'une quelconque des revendications précédentes, **caractérisé en ce que** la soupape d'amenée (19) du système de précommande est disposée entre la zone d'aspiration (3) de la climatisation et l'espace de pression de précommande (23).

12. Système d'étranglement pour gaz pauvre selon l'une quelconque des revendications précédentes, **caractérisé en ce que** la résistance à l'écoulement d'amenée (21) du système de précommande est disposée entre l'espace de pression de précommande (23) et la zone d'aspiration (5) du compresseur.

13. Système d'étranglement pour gaz pauvre selon l'une quelconque des revendications précédentes, **caractérisé en ce que** le tiroir (11) est réalisé comme un tiroir à membrane.

14. Système d'étranglement pour gaz pauvre selon l'une quelconque des revendications précédentes, **caractérisé en ce que** le tiroir est réalisé comme un robinet à piston.

15. Système d'étranglement pour gaz pauvre selon l'une quelconque des revendications précédentes, **caractérisé en ce qu'**un tiroir en forme de douille (11) avec des ouvertures (14) réalise avec une douille de guidage (9) dotées d'ouvertures (15) un point d'étranglement pour le courant de sortie du compresseur de climatisation.
